# EUROPÄISCHE PATENTSCHRIFT

(11) **EP 1 337 427 B1**
(45) Veröffentlichungstag und Bekanntmachung des Hinweises auf die Patenterteilung: **07.07.2004**
(21) Anmeldenummer: 01992667.4
(22) Anmeldetag: 23.10.2001
(51) Int. Cl.: B62D 6/00, B62D 5/04

(54) **LENKANLAGE MIT FAHRDYNAMIK-REGELUNG**
STEERING SYSTEM HAVING DRIVING DYNAMICS REGULATION
MECANISME DE DIRECTION A REGULATION DE LA DYNAMIQUE DE ROULEMENT

(30) Priorität: 24.10.2000 DE 10052559
(43) Veröffentlichungstag der Anmeldung: 27.08.2003
(73) Patentinhaber: ROBERT BOSCH GMBH, 70442 Stuttgart (DE)
(72) Erfinder: DOMINKE, Peter, 74321 Bietigheim-Bissingen (DE); LEIMBACH, Klaus-Dieter, 73569 Eschach (DE); CAO, Chi-Thuan, 70825 Korntal (DE)
(86) Internationale Anmeldenummer: PCT/EP2001/012219
(87) Internationale Veröffentlichungsnummer: WO 2002/036411

(56) Entgegenhaltungen:
- WO-A-00/50290
- DE-A- 19 801 974
- DE-A- 19 804 675
- DE-A- 19 912 169
- DE-C- 19 650 475

## Beschreibung

Die Erfindung betrifft eine Lenkanlage nach dem Oberbegriff des Anspruchs 1. Eine solche Lenkanlage ist aus der WO 00/50290 bekannt.

Zugrunde gelegt wird ein SbW-System (SbW = Steer by wire), welches einen elektrischen Lenksteller aufweist, der am Lenkgetriebe insbesondere der Vorderachse eines Kraftfahrzeuges oder jeweils an den beiden Vorderrädern angebracht ist. Der Fahrerlenkwunsch wird an einem Lenkrichtungsgeber (beispielsweise Lenkrad) durch einen Geber abgegriffen. Die Rückwirkungen der Straße werden durch einen am Lenkrad angebrachten Aktuator an den Fahrer übermittelt.

Der Fahrerlenkwunsch wird mit Hilfe des Lenkstellers an wenigstens einem lenkbaren Fahrzeugrad, insbesondere an den Vorderrädern realisiert. Das durch den Wegfall der Lenksäule "verlorengegangene" Straßengefühl (Lenkgefühl) , wovon der Fahrerwunsch stark abhängt, wird mit Hilfe des am Lenkrad angebrachten Aktuators nachgebildet.

Ein wesentlicher Vorteil einer SbW-Lenkung besteht darin, dass der Lenksteller auch von Größen mitgesteuert werden kann, die Zustände des gelenkten Fahrzeuges oder auf das Fahrzeug von außen einwirkende Einflüsse repräsentieren wie beispielsweise Seitenkräfte, die ein Abdriften des Fahrzeugs von derjenigen Richtung bewirken können, die dem vorgegebenen Fahrerlenkwusch entspricht. Dazu ist in der DE 198 04 675 A1 ein Spurstangen-Axialkraftsensor vorgesehen, der eine Lenksteuereinheit beeinflusst.

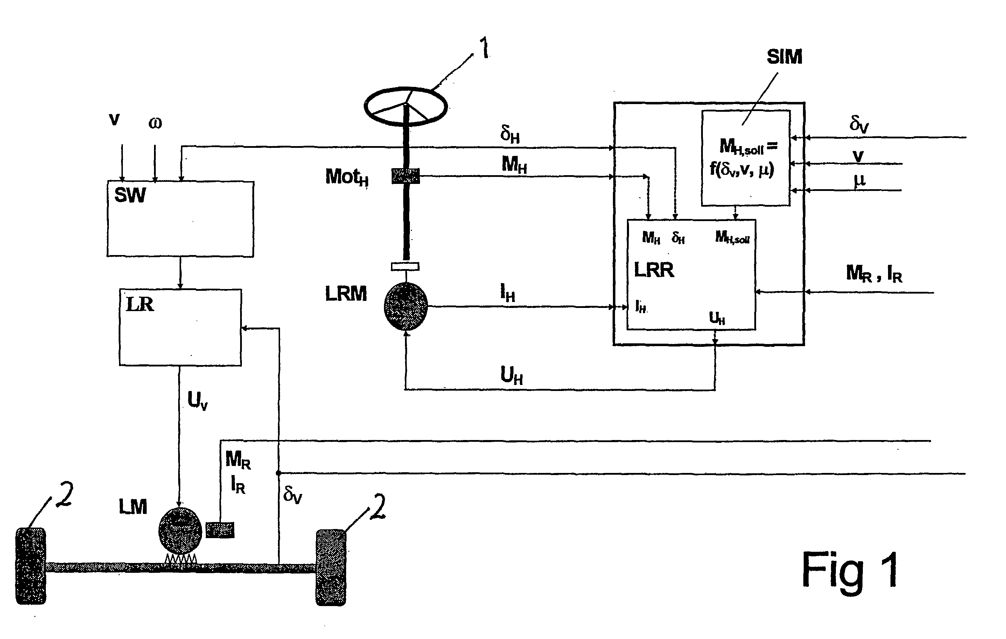

Fig.1 gibt übersichtlich die schematische Darstellung eines "Steer-by-Wire"-Systems wieder. Der Name "Steer-by-Wire" berücksichtigt die Tatsache, daß die Lenkung nicht über die konventionelle mechanische Lenksäule, sondern mit Hilfe eines Lenkstellers elektronisch realisiert wird.

Dieses System ist aus der DE 19912169 bekannt.

Es bedeuten:

| | | | |
|---|---|---|---|
| **LRM** | Lenkradmotor | **LM** | Lenkmotor (= Lenksteller) |
| **δ**_{**H**} | Lenkradwinkel | **δ**_{**v**} | Lenkwinkel Vorderrad |
| **M**_{**H**} | Lenkradmoment | **M**_{**R**} | Rad-Rückstellmoment, |
| **I**_{**H**} | Strom am Lenkradmotor LRM | **I**_{**R**} | gemessen am Lenkmotor Strom am Lenkmotor LM |
| **U**_{**H**} | Spannung Lenkradmotor | **U**_{**v**} | Spannung am Lenkmotor |
| **V** | Fahrzeuggeschwindigkeit | µ | Reibwert Straße/Reifen |
| **ω** | Gierwinkelgeschwindigkeit. | | (= Kraftschlussbeiwert) |
| **SIM** | Rückwirkungs-Simulator | **SW** | Sollwertbildung |
| **LRR** | Lenkradregler | **LR** | Lenkregler |

Der durch einen Lenkwinkelsensor δ_{H} erfasste Fahrerlenkwunsch wird gezielt mit Hilfe einer "Sollwertbildung" SW situationsabhängig unter Verwendung von fahrdynamischen Größen (wie z.B. Fahrgeschwindigkeit v, Gierwinkelgeschwindigkeit ω) modifiziert, bevor er als Sollwert an den Lenkregler LR weitergeleitet wird. Ein Elektromotor ist als Lenksteller (Lenkmotor LM) an der Vorderachse angebracht.

Das durch den Wegfall der Lenksäule "verlorengegangene" Straßengefühl (Fahrgefühl), welches durch das Rad-Rückstellmoment am gelenkten Rad 2 bzw. das Handmoment M_{H} am Lenkrad 1 ausgedrückt wird und wovon der Fahrerlenkwunsch stark abhängt, wird mit Hilfe eines sogenannten "Feedback-Aktuators" (Lenkradmotor LRM) wiederhergestellt.Dieser Feedback-Aktuator des Steer-by-Wire-Fahrzeugs (so genannter Lenkradsteller) besteht aus einem Elektromotor, der über ein Getriebe mit dem Lenkrad gekoppelt ist und mittels eines Lenkradreglers LRR geregelt wird. Das für die Regelung erforderliche Soll-Handmoment M_{H, soll} kann auf zweierlei Weisen zur Verfügung gestellt werden:

Erste Alternative: Das Soll-Handmoment M_{H, Soll} wird mit Hilfe eines Feedback-Simulators SIM aus Signalen von Lenkwinkelsensoren δᵥ und anderen im Fahrzeug ohnehin vorhandenen Signalen (wie v, µ) nachgebildet.

Zweite Alternative: Das Soll-Handmoment M_{H, Soll} wird mit den Rad-Rückstellmomenten M_{R} oder Strömen I_{R} ermittelt, die mit einem am Lenksteller LM angebrachten Momentensensor bzw. Stromsensor gemessen werden.

Beide Alternativen können miteinander kombiniert werden, wie in Figur 1 dargestellt.

Das auf die eine oder andere Weise ermittelte Soll-Handmoment M_{H, soll} wird dem Lenkradregler LRR zugeführt, der den Lenkradsteller LRM so steuert, dass das Handmoment M_{H} (ermittelt mit geeigneten Sensoren) auf das Lenkrad übertragen wird.

Durch die Entkopplung von Lenkrad (Lenk-Richtungsgeber) und gelenkten Rädern ermöglichen SbW-Systeme fahrdynamische Lenkeingriffe ohne Rückwirkung auf das Lenkrad.

Ein Bereich der Fahrdynamikregelung ist die Vermeidung des Drehens des Fahrzeugs um die Hochachse durch Regelung der Gierwinkelgeschwindigkeit. Ein anderer Bereich der Fahrdynamikeingriffe umfasst die Verbesserung des Geradeauslaufs des Fahrzeugs (der durch Einflüsse wie Seitenwind, Fahrbahnneigung usw. gefährdet ist) durch Ausregelung von Seitenkräften.

Heutige Entwicklungen verwenden hierfür einen Drehratensensor (Sensor für die Gierwinkelgeschwindigkeit ω), der das tatsächliche Fahrzeugverhalten sensiert. Mit Hilfe eines Gierreglers wird die Abweichung zwischen Fahrervorgabe und dem tatsächlichen Fahrzeugverhalten ausgeregelt.

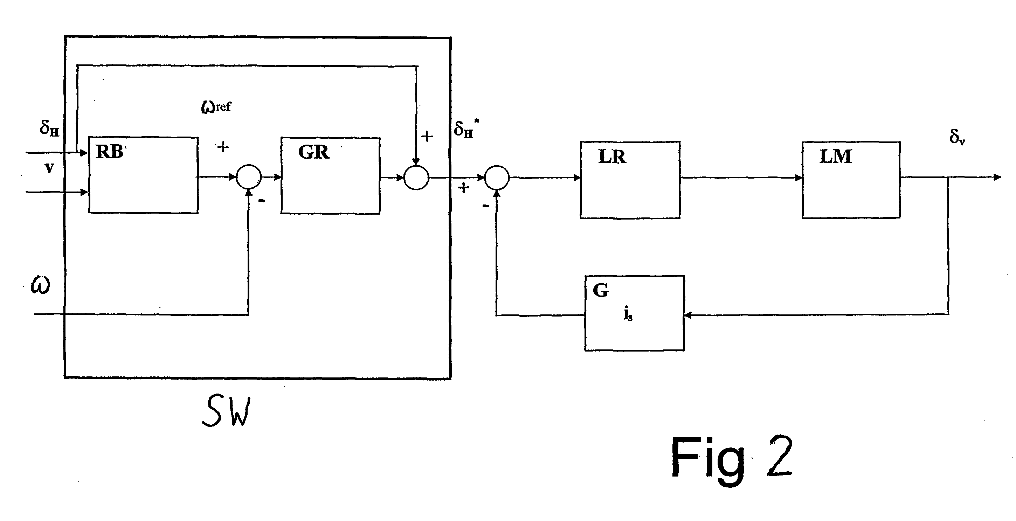

Eine solche Anordnung zur Verbesserung der Querdynamik durch Fahrdynamikregelung ist in Fig. 2 in Verbindung mit Figur 1 dargestellt. Dabei stellt Figur 2 die Blöcke SW, LR, LM der Figur 1 ausführlicher dar, wobei mit G das Lenkgetriebe bezeichnet ist, das dem Lenksteller LM nachgeordnet ist. In der Einrichtung zur Sollwertbildung SW wird der Fahrerlenkwunsch δ_{H} mit Hilfe eines Gierreglers GR so verändert, dass ein gewünschtes Gierverhalten eingehalten werden kann. Ein Referenzmodell (Einrichtung zur Referenzbildung RB) dient dazu, das gewünschte Gierverhalten ω_{ref} vorzugeben. 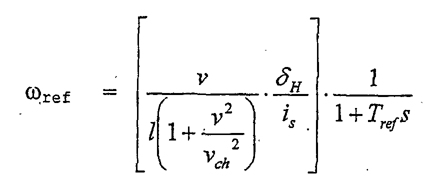
- ω_{ref} :: Soll-Giergeschwindigkeit
- v :: Geschwindigkeit
- v_{ch} :: Charakteristische Geschwindigkeit (≈60 ... 100 km/h)
- l :: Achsstand
- T_{ref}:: Zeitkonstant
- s :: Laplace-Operator
- iₛ :: Übersetzungsverhältnis des Lenkgetriebes

Der Gierregler GR kann ein standardmäßiger PID-Regler oder ein robuster Modellfolgeregler (wie z.B. in EP 550 527 = DE 40 30 846 dargestellt) sein. Der resultierende Ausgang des Gierreglers bestimmt den modifizierten Fahrerlenkwunsch δ_{H}*.

Anstelle der Soll-Giergeschwindigkeit ω_{ref} kann auch die Soll-Querbeschleunigung des Fahrzeuges a_{y,ref} oder eine Kombination dieser beiden Größen verwendet werden.

Der Nachteil bei dieser Vorgehensweise des Standes der Technik ist, dass aufwendige, teuere Drehraten- bzw. Beschleunigungssensoren zusätzlich eingesetzt werden müssen. Außerdem steht die Information ω über das Gierverhalten erst zur Verfügung, wenn das Fahrzeug bereits von der vorgegebenen Richtung abgewichen ist.

### Vorteile der Erfindung

Um ohne gesonderten Gierwinkel-, Gierwinkelgeschwindigkeits-, Gierwinkelbeschleunigungs- oder Querbeschleunigungs-Sensor auskommen zu können, wird als steuernde Fahrzustandsgröße das vom Fahrzeugrad auf den Lenksteller einwirkende Rad-Rückstellmoment oder die entsprechende Rad-Rückstellkraft verwendet.

Der Anmeldungsgegenstand mit den Merkmalen des Anspruches 1 hat dem ensprechend den Vorteil, eine Fahrdynamik-Regelung ohne Zusatzsensoren zu ermöglichen.

Weitere Vorteile sind:
- Flexible Struktur hinsichtlich Funktionsrealisierung
- Verbesserung der Querdynamik durch Modifikation des Fahrerlenkwunsches
- Integration der Funktion in den Lenkkomfort eines SbW-Systems
- Der Drehratensensor entfällt. Aktive fahrdynamische Eingriffe ohne zusätzliche teuere Sensoren (Gierratensensoren) sind möglich
- Die Regelung findet statt, bevor Reaktionen am Fahrzeug bemerkbar sind

Dazu können beitragen:
- Steer-by-Wire mit elektrischen/elektrohydraulischen Lenkstellern
- Ermittlung des Gierverhaltens aus Fahrzeug- und Reifenmodell bzw. aus Lenkstellerströmen bzw. -momenten
- Realisierung des fahrdynamischen Eingriffes mit dem Lenksteller auf Grund von Rad-Rückstellmomenten.

Vorteilhafte Weiterbildungen der Erfindung sind in den abhängigen Ansprüchen angegeben, deren Merkmale auch, soweit sinnvoll, miteinander kombiniert werden können.

### Zeichnungen

Schematisch ist gezeigt in
- Figur 1:: eine Darstellung eines bekannten "Steer-by-Wire"-Systems mit einem Lenksteller,
- Figur 2:: ein bekanntes Detail von Figur 1 zur Verbesserung der Querdynamik durch Fahrdynamik-Regelung,
- Figur 3:: ein Detail der erfindungsgemäßen Lenkanlage zur Fahrdynamik-Regelung mit Hilfe von Rad-Rückstellmomenten.

Im Wesentlichen gleiche Teile in unterschiedlichen Figuren sind mit gleichen Bezugszeichen versehen.

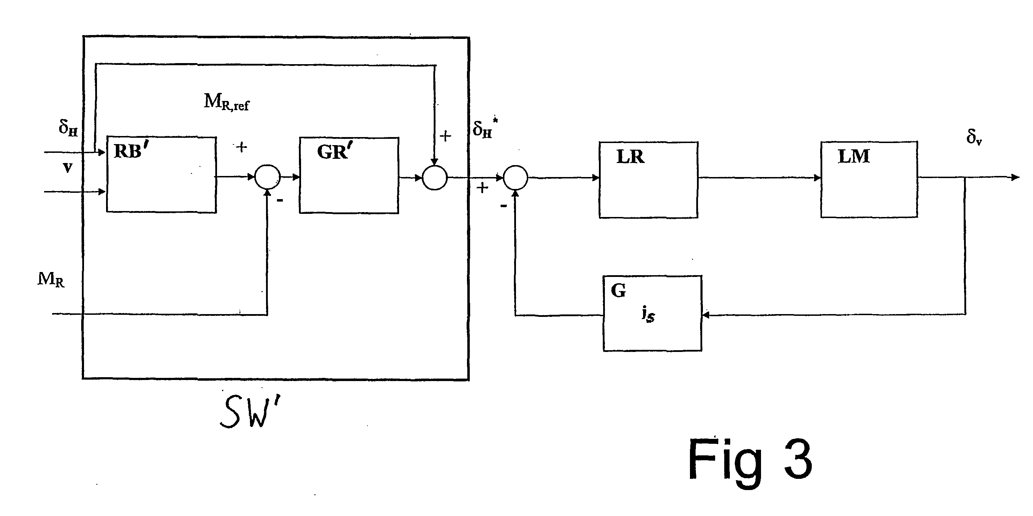

Bei der Lenkanlage nach der Erfindung (Figur 3) wird das Rad-Rückstellmoment M_{R} (nach entsprechender Aufbereitung und Filterung) zur Fahrdynamikregelung verwendet. Dazu wird in den Figuren 1 und 2 der Block SW durch den Block SW' in Figur 3 ersetzt. Anders ausgedrückt: Der Block SW von Figur 2 wird durch den Block SW' von Figur 3 ersetzt.

Für die Fahrdynamik-Regelung nach der Erfindung wird als Ist-Moment das Rad-Rückstellmoment M_{R} benötigt.

### Ermittlung des Ist-Wertes M_{R}:

In Figur 1 wird das Rad-Rückstellmoment M_{R} durch eine Momentenmessung bzw. eine Strommessung am Lenksteller LM (wozu die Messmittel bei einem Steer-by-Wire-System ohnehin schon vorhanden sind) ermittelt und aufbereitet (Fall a). Dies kann auch über eine Modellbildung mit Hilfe ohnehin bekannter Daten, insbesondere Fahrzeugdaten (µ, v, δᵥ, etc.) berechnet werden (Fall b). Eine Kombination dieser beiden Verfahren ist möglich (wie dargestellt).

Zur Ermittlung des Rad-Rückstellmoments M_{R} durch eine Messung wird das Rad-Rückstellmoment M_{R} mittels Momentenmessung an den Vorderrädern bzw. über eine Messung des Lenkstellerstroms I_{R} gemessen und konvertiert (Fall a).

Das durch eine Momentenmessung M_{R} bzw. eine Strommessung I_{R} des Lenkstellers LM ermittelte Rad-Rückstellmoment M_{R} wird aufbereitet und bewertet. Durch Filterung können Fahrbahnunebenheiten, Vibrationen, Abdrücken des Rades am Bordstein etc. eliminiert werden. Wichtige Momentenänderungen, die bei Fahrbahnbelagsänderungen, Fahren auf Glatteis, Seitenwind etc. auftreten, werden unverändert an den Gierregler GR' (Figur 3) übertragen.

Zur modellgestützten Nachbildung des Rad-Rückstellmoments M_{R} (Fall b) wird über ein Fahrzeugmodell (im einfachsten Fall: "Einspurmodell") anhand der Fahrzeuggeschwindigkeit v und des Lenkwinkels δᵥ das Gierverhalten des Fahrzeugs und daraus die Schräglaufwinkel der Räder berechnet. Durch die Verwendung eines Reifenmodells wird das Rad-Rückstellmoment M_{R} an den Vorderrädern berechnet.

### Ermittlung des Sollwertes M_{R}:

Da bei bekanntem µ ein fester Zusammenhang zwischen Lenkwinkel δᵥ, Fahrzeuggeschwindigkeit v und Rad-Rückstellmoment M_{R} (siehe oben) besteht, kann durch ein modifiziertes Referenzmodell RB' in Figur 3 ein Sollwert M_{R,ref} des Rad-Rückstellmomentes aus Lenkwinkel δᵥ oder δ_{H} und Fahrzeuggeschwindigkeit v bestimmt werden.

Eine Abweichung der Ist-Rad-Rückstellmomente M_{R} von den Soll-Rad-Rückstellmomenten M_{R,ref} kann somit mit Hilfe des Gierreglers GR' durch eine Lenkwinkel-Korrektur kompensiert werden.

Beispiel: Fahrerwunsch ist Geradeausfahrt. Das daraus berechnete Soll-Rad-Rückstellmoment M_{R, ref} ist Null. Treten (durch Seitenwind, Fahrbahnneigung usw.) Seitenkräfte am Fahrzeug und damit an den Rädern auf, so entsteht ein Schräglauf. Der Schräglaufwinkel, der normalerweise eine Richtungsänderung des Fahrzeugs zur Folge hat und durch den Fahrer durch Gegenlenken ausgeregelt werden muss, kann durch eine rückstellmoment- bzw. rückstellkraftabhängige Radwinkel-Korrektur, wie oben gezeigt, kompensiert werden. Dazu müssen lediglich die Seitenkräfte oder das Rad-Rückstellmoment sensiert werden.

## Patentansprüche

1. Lenkanlage, mit Fahrdynamik-Regelung und bei der im ungestörten Betrieb keine mechanische Verbindung zwischen einem bedienbaren Lenkrichtungsgeber (1) und einem gelenkten Fahrzeugrad vorgesehen ist, mit einem Lenksteller (LM), der auch von dem Rad-Rückstellmoment (M_{R}) oder von der entsprechenden Rad-Rückstellkraft gesteuert ist, das beziehungsweise die vom Fahrzeugrad (2) auf den Lenksteller einwirkt, wobei Mittel vorgesehen sind, die
aus Fahrgeschwindigkeit (v) und Lenkwinkel (δᵥ, δ_{H}) ein Referenz-Rad-Rückstellmoment (M_{R}, _{ref}) bilden und mit dem Rad-Rückstellmoment (M_{R}) vergleichen,
**dadurch gekennzeichnet, dass** das Vergleichsergebnis einem Gierregler (GR') zugeführt wird, und dass Mittel vorgesehen sind, die zum Ausgangssignal des Gierreglers (GR') den Lenkwinkel (δᵥ, δ_{H}) hinzufügen, um einen korrigierten Lenkwinkel (δ_{H}*) zu bilden, der einen Lenkregler (LR) für den Lenksteller (LM) steuert.

2. Lenkanlage nach Anspruch 1, **dadurch gekennzeichnet, dass** zur Ermittlung des Rad-Rückstellmoments (M_{R}) ein Momentensensor vorgesehen ist.

3. Lenkanlage nach Anspruch 1, **dadurch gekennzeichnet, dass** ein elektromagnetischer Lenkssteller (LM) vorgesehen ist, dessen Strom (I_{R}) zur Ermittlung des Rad-Rückstellmoments (M_{R}) dient.

4. Lenkanlage nach Anspruch 1, **dadurch gekennzeichnet, dass** das Rad-Rückstellmoment (M_{R}) mit Hilfe eines Fahrzeugmodells und eines Reifenmodells nachgebildet wird unter Verwendung der Fahrzeuggeschwindigkeit (v) und des Lenkwinkels (δᵥ oder δ_{H}).

5. Lenkanlage nach einem der Ansprüche 1 bis 4,
**dadurch gekennzeichnet, dass** das Rad-Rückstellmoment (M_{R}) auch zur Steuerung eines Aktuators (LRM) dient, der zur Simulation des Lenkgefühls am Lenkrichtungsgeber (1) vorgesehen ist.

## Claims

1. Steering system having driving dynamics control and in the case of which during undisturbed operation no mechanical connection is provided between an operator-controllable steering direction sensor (1) and a steered vehicle wheel, having a steering actuator (LM) which is also controlled by the wheel aligning torque (M_{R}) or by the corresponding wheel aligning force, which torque or force acts from the vehicle wheel (2) on the steering actuator, means being provided which form a reference wheel aligning torque (M_{R}, _{ref}) from vehicle speed (v) and steering angle (δᵥ, δ_{H}), and compare it with the wheel aligning torque (M_{R}), **characterized in that** the result of comparison is fed to a yaw controller (GR'), and **in that** means are provided which add the steering angle (δᵥ, δ_{H}) to the output signal of the yaw controller (GR'), in order to form a corrected steering angle (δ_{H}*) which controls a steering controller (LR) for the steering actuator (LM).

2. Steering system according to Claim 1, **characterized in that** a torque sensor is provided for determining the wheel aligning torque (M_{R}).

3. Steering system according to Claim 1, **characterized in that** an electromagnetic steering actuator (LM) is provided whose current (I_{R}) serves for determining the wheel aligning torque (M_{R}).

4. Steering system according to Claim 1, **characterized in that** the wheel aligning torque (M_{R}) is simulated with the aid of a vehicle model and a tyre model in conjunction with the use of the vehicle speed (v) and the steering angle (δᵥ or δ_{H}).

5. Steering system according to one of Claims 1 to 4, **characterized in that** the wheel aligning torque (M_{R}) also serves for controlling an actuator (LRM) which is provided for simulating the steering feel at the steering direction sensor (1).

## Revendications

1. Mécanisme de direction avec régulation de la dynamique de roulement dans lequel, en cas de fonctionnement non perturbé, aucune liaison mécanique n'est prévue entre un capteur de sens de direction (1) réglable et une roue de véhicule dirigée, et comprenant un actionneur de direction (LM) également commandé par le couple de rappel (Mᵣ) ou par la force de rappel de roue correspondante agissant depuis la roue de véhicule (2) sur l'actionneur de direction et des moyens qui, à partir de la vitesse déroulement (v) et de l'angle de direction (δᵥ δ_{H}), forment un couple de rappel de roue de référence (M_{r,ref}) et le comparent au couple de rappel de roue (Mᵣ)
**caractérisé en ce que**
le résultat de la comparaison est transmis à un régulateur de lacet (GR'), et des moyens son prévus pour ajouter au signal de sortie du régulateur de lacet (GR') l'angle de direction (δᵥ, δ_{H}), pour former un angle de direction corrigé (δ_{H}*) qui commande un régulateur de direction (LR) pour l'actionneur de direction (LM).

2. Mécanisme de direction selon la revendication 1,
**caractérisé en ce qu'**
un capteur de couple est prévu pour déterminer le couple de rappel de roue (Mr).

3. Mécanisme de direction selon la revendication 1,
**caractérisé en ce que**
un actionneur de direction (LM) électromagnétique est prévu, dont le courant (Iᵣ) sert à déterminer le couple de rappel de roue (Mᵣ).

4. Mécanisme de direction selon la revendication 1,
**caractérisé en ce que**
le couple de rappel de roue (Mᵣ) est reproduit à l'aide d'un modèle de véhicule et d'un modèle de pneumatique en utilisant la vitesse de véhicule (v) et l'angle de direction (δᵥ ou δ_{H})

5. Mécanisme de direction selon l'une quelconque des revendications 1 à 4,
**caractérisé en ce que**
le couple de rappel de roue (Mᵣ) sert également à la commande d'un actionneur (LRM) prévu sur le capteur de sens de direction (1) pour simuler la sensation de direction.
